# FASCICULE DE BREVET EUROPEEN

(11) **EP 3 099 486 B1**
(45) Date de publication et mention de la délivrance du brevet: **03.01.2018**
(21) Numéro de dépôt: 15702704.6
(22) Date de dépôt: 27.01.2015
(51) Int. Cl.: B32B 27/30, B32B 27/32, B60C 1/00

(54) **STRATIFIE MULTICOUCHE POUR PNEUMATIQUE**
MEHRSCHICHTLAMINAT FÜR EINEN REIFEN
MULTILAYER LAMINATE FOR A TYRE

(30) Priorité: 28.01.2014 FR 1450669
(43) Date de publication de la demande: 07.12.2016
(73) Titulaire: Compagnie Générale des Etablissements Michelin, 63000 Clermont-Ferrand (FR)
(72) Inventeur: GREIVELDINGER, Marc, F-63040 Clermont-Ferrand Cedex 9 (FR); CUSTODERO, Emmanuel, F-63040 Clermont-Ferrand Cedex 9 (FR); CHOUVEL, Christophe, F-63040 Clermont-Ferrand Cedex 9 (FR)
(74) Mandataire: Sidhu, Alban
(86) Numéro de dépôt international: PCT/EP2015/051589
(87) Numéro de publication internationale: WO 2015/113967

(56) Documents cités:
- WO-A1-2010/063427
- US-A1- 2012 111 469
- US-A1- 2013 248 085

## Description

La présente invention est relative aux stratifiés pour pneumatiques comportant une composition dont les élastomères sont majoritairement des élastomères thermoplastiques (TPE), dans une de leurs couches élastomériques.

Dans un pneumatique conventionnel les différentes couches élastomériques sont constituées de compositions d'élastomères diéniques, adhérant les unes aux autres par les liaisons créées lors de la réticulation desdits élastomères. Ces couches doivent donc être associées avant la cuisson (ou la réticulation) afin de permettre leur adhésion.

Il est d'intérêt aujourd'hui pour les fabricants de pneumatique, d'utiliser des couches élastomériques comprenant, à titre d'élastomères, majoritairement des élastomères thermoplastiques (TPE) afin de bénéficier des propriétés de ces élastomères, notamment pour la réduction de la résistance au roulement et la facilité de mise en oeuvre. De telles couches en élastomères thermoplastiques sont par exemple décrites dans le document WO2012/152686.

La difficulté de l'utilisation de telles couches, dont les élastomères sont majoritairement des TPE, est leur adhésion aux couches diéniques adjacentes de composition conventionnelle, et ce, avant la cuisson du stratifié résultant ou après la cuisson de la couche adjacente à la couche dont les élastomères sont majoritairement des TPE.

Afin d'améliorer cette adhésion, les demanderesses ont précédemment décrit des stratifiés pour pneumatique comportant une couche dont les élastomères sont majoritairement des élastomères thermoplastiques (TPE), par exemple dans le document WO2010/063427. Dans ce document, la couche majoritairement composée de TPE, peut adhérer à une couche diénique par la présence d'une couche adhésive spécifique intermédiaire. S'il est efficace, le stratifié résultant ajoute une couche supplémentaire dans la structure du pneumatique, ce qui l'alourdit et ajoute une étape dans sa fabrication.

Dans le but d'améliorer les pneumatiques conventionnels par l'utilisation d'une couche majoritairement à base d'un élastomère TPE, tout en simplifiant l'adhésion d'une telle couche à une couche diénique adjacente, réticulée ou non réticulée, la demanderesse a trouvé de manière surprenante le stratifié de l'invention.

L'invention a donc pour objet un stratifié élastomérique pour pneumatique, ledit stratifié comportant au moins deux couches adjacentes d'élastomère :
o une première couche, constituée d'une composition à base d'au moins un élastomère thermoplastique (TPE), ledit élastomère thermoplastique étant un copolymère bloc comprenant au moins un bloc élastomère de type copolymère statistique butadiène-styrène éventuellement hydrogéné et au moins un bloc thermoplastique de type styrénique, à un taux compris dans un domaine allant de plus de 50 à 100 pce (parties en poids pour 100 parties en poids d'élastomère) ;
o une deuxième couche, constituée d'une composition à base d'au moins un élastomère diénique, le taux d'élastomère diénique étant compris dans un domaine allant de plus de 50 à 95 pce, et d'au moins un élastomère thermoplastique (TPE), ledit élastomère thermoplastique étant un copolymère bloc comprenant au moins un bloc élastomère de type copolymère statistique butadiène-styrène éventuellement hydrogéné et au moins un bloc thermoplastique de type styrénique, à un taux compris dans un domaine allant de 5 à moins de 50 pce.

Ce stratifié permet d'avoir une adhésion satisfaisante entre les deux couches du stratifié multicouche de l'invention. Par rapport aux solutions de l'art antérieur, l'invention est d'une grande simplicité puisqu'elle permet de s'affranchir d'une couche dont la seule fonction serait l'adhésion de la couche TPE sur la couche diénique et ainsi de ne pas alourdir le pneumatique et donc de ne pas augmenter sa résistance au roulement.

Un autre avantage majeur de l'invention est de permettre une économie de matériaux puisque qu'au lieu d'utiliser une couche élastomérique supplémentaire pour l'adhésion, l'invention permet à une couche majoritairement diénique (comme les compositions des pneumatiques conventionnels) d'adhérer à une couche élastomère thermoplastique. Cette économie est par ailleurs très favorable à la préservation de l'environnement.

De préférence, l'invention concerne un stratifié tel que défini ci-dessus, dans lequel la masse moléculaire moyenne en nombre des élastomères thermoplastiques est comprise entre 30 000 et 500 000 g/mol.

De préférence également, l'invention concerne un stratifié tel que défini ci-dessus, dans lequel les blocs élastomères des élastomères thermoplastiques sont choisis parmi les élastomères ayant une température de transition vitreuse inférieure à 25°C. Préférentiellement, le ou les blocs élastomères SBR ont une teneur en styrène comprise dans un domaine allant de 10 à 60%. Préférentiellement également, le ou les blocs élastomères SBR ont une teneur en liaisons -1,2 pour la partie butadiénique comprise dans un domaine allant de 4% à 75% molaire, et une teneur en liaisons -1,4 comprise dans un domaine allant de 20% et 96% molaire.

De préférence, l'invention concerne un stratifié tel que défini ci-dessus, dans lequel le ou les blocs élastomères SBR de la première couche sont hydrogénés de telle manière qu'une proportion allant de 25 à 100 % molaire, préférentiellement de 50 à 100 % molaire, et de préférence de 80 à 100 % molaire des doubles liaisons dans la portion butadiène sont hydrogénées.

De préférence également, l'invention concerne un stratifié tel que défini ci-dessus, dans lequel le ou les blocs élastomères SBR de la deuxième couche sont hydrogénés de telle manière qu'une proportion allant de 0 à 80 % molaire, préférentiellement de 20 à 70% molaire, et de préférence de 30 à 60% molaire des doubles liaisons dans la portion butadiène sont hydrogénées.

De préférence également, l'invention concerne un stratifié tel que défini ci-dessus, dans lequel le ou les blocs thermoplastiques styréniques du copolymère bloc sont choisis parmi les polymères ayant une température de transition vitreuse supérieure à 80°C, et, dans le cas d'un bloc thermoplastique semi cristallin, une température de fusion supérieure à 80°C. Préférentiellement, la fraction de bloc thermoplastique styrénique dans le copolymère bloc est comprise dans un domaine allant de 5 à 70 %.

De manière préférentielle, l'invention concerne un stratifié tel que défini ci-dessus, dans lequel le ou les blocs thermoplastiques du copolymère bloc sont choisis parmi les polystyrènes, de préférence choisis parmi les polystyrènes obtenus à partir de monomères styréniques choisis dans le groupe constitué par le styrène non substitué, les méthylstyrènes, le para-tertio-butylstyrène, les chlorostyrènes, les bromostyrènes, les fluorostyrènes, le para-hydroxy-styrène, et les mélanges de ces derniers. Préférentiellement, le ou les blocs thermoplastiques du copolymère bloc sont choisis parmi les polystyrènes obtenus à partir de monomères styréniques choisis dans le groupe constitué par le styrène non substitué, l'o-méthylstyrène, le m-méthylstyrène, le p-méthylstyrène, l'alpha-méthylstyrène, l'alpha-2-diméthylstyrène, l'alpha-4-diméthylstyrène, le diphényléthylène, le para-tertio-butylstyrène, l'o-chlorostyrène, le m-chlorostyrène, le p-chlorostyrène, le 2,4-dichlorostyrène, le 2,6-dichlorostyrène, le 2,4,6-trichlorostyrène, l'o-bromostyrène, le m-bromostyrène, le p-bromostyrène, le 2,4-dibromostyrène, le 2,6-dibromostyrène, le 2,4,6-tribromostyrène, l'o-fluorostyrène, le m-fluorostyrène, le p-fluorostyrène, le 2,4-difluorostyrène, le 2,6-difluorostyrène, le 2,4,6-trifluorostyrène, le para-hydroxy-styrène, et les mélanges de ces derniers. Plus préférentiellement, le ou les blocs thermoplastiques du copolymère bloc sont obtenus à partir de polystyrène non substitué.

De préférence, l'invention concerne un stratifié tel que défini ci-dessus, dans lequel le taux d'élastomère thermoplastique (TPE) copolymère bloc comprenant au moins un bloc élastomère de type copolymère statistique butadiène-styrène éventuellement hydrogéné et au moins un bloc thermoplastique de type styrénique, dans la composition de la première couche est compris dans un domaine allant de 70 à 100 pce, de préférence, de 80 à 100 pce.

Préférentiellement, l'invention concerne un stratifié tel que défini ci-dessus, dans lequel l'élastomère thermoplastique copolymère bloc comprenant au moins un bloc élastomère de type copolymère statistique butadiène-styrène éventuellement hydrogéné et au moins un bloc thermoplastique de type styrénique, est le seul élastomère de la première couche.

De préférence, l'invention concerne un stratifié tel que défini ci-dessus, dans lequel la première couche ne contient pas de système de réticulation.

De manière préférentielle, l'invention concerne un stratifié tel que défini ci-dessus, dans lequel la première couche comprend en outre une résine thermoplastique comprenant des motifs polyphénylène éther éventuellement substitués. De préférence, la résine thermoplastique à base de motifs polyphénylène éther éventuellement substitués présente une température de transition vitreuse (Tg), mesurée par DSC selon la norme ASTM D3418 de 1999, comprise dans un domaine allant de 0 à 215°C. De préférence également, la résine thermoplastique à base de motifs polyphénylène éther éventuellement substitués est un composé comprenant majoritairement des motifs polyphénylène de formule générale (I): 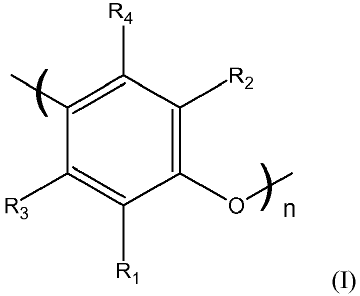 dans laquelle :
- R1, R2, R3 et R4 représentent indépendamment les uns des autres des groupements identiques ou différents choisis parmi les groupements hydrogène, hydroxy, alkoxy, halogène, amino, alkylamino, dialkylamino ou les groupements hydrocarbonés comportant au moins 2 atomes de carbone, éventuellement interrompus par des hétéroatomes et éventuellement substitués ; R1 et R3 d'une part et R2 et R4 d'autre part pouvant former ensemble avec les atomes de carbones auxquels ils se rattachent un ou plusieurs cycles accolés au cycle benzénique du composé de formule (I),
- n est un entier compris dans un domaine allant de 3 à 300.

De préférence également, l'invention concerne un stratifié tel que défini ci-dessus, dans lequel R1 et R2 représentent un groupement alkyle et en particulier un groupe méthyle ; et R3 et R4 représentent des atomes d'hydrogène.

Préférentiellement, l'invention concerne un stratifié tel que défini ci-dessus, dans lequel le taux de ladite résine thermoplastique à base de motifs polyphénylène éther éventuellement substitués est compris dans un domaine allant de 1 à 90 pce, de préférence de 2 à 80 pce, plus préférentiellement, de 3 à 60 pce, mieux de 5 à 60 pce.

De préférence, l'invention concerne un stratifié tel que défini ci-dessus, dans lequel le taux d'élastomère thermoplastique (TPE) copolymère bloc comprenant au moins un bloc élastomère de type copolymère statistique butadiène-styrène éventuellement hydrogéné et au moins un bloc thermoplastique de type styrénique, dans la composition de la deuxième couche est compris dans un domaine allant de 5 à 49 pce, plus préférentiellement de 10 à 49 pce.

De préférence également, l'invention concerne un stratifié tel que défini ci-dessus, dans lequel l'élastomère diénique de la deuxième couche est choisi dans le groupe constitué par les élastomères diéniques essentiellement insaturés, et les mélanges de ces élastomères. Préférentiellement, l'élastomère diénique est choisi dans le groupe constitué par les homopolymères obtenus par polymérisation d'un monomère diène conjugué ayant de 4 à 12 atomes de carbone, les copolymères obtenus par copolymérisation d'un ou plusieurs diènes conjugués entre eux ou avec un ou plusieurs composés vinyle aromatique ayant de 8 à 20 atomes de carbone, et les mélanges de ces derniers. Plus préférentiellement, l'élastomère diénique est choisi dans le groupe constitué par les polybutadiènes, les polyisoprènes de synthèse, le caoutchouc naturel, les copolymères de butadiène, les copolymères d'isoprène et les mélanges de ces élastomères.

Préférentiellement, l'invention concerne un stratifié tel que défini ci-dessus, dans lequel la deuxième couche comprend une charge renforçante, de préférence, la charge renforçante est du noir de carbone et/ou de la silice. Préférentiellement, la charge renforçante majoritaire est la silice.

L'invention concerne également un pneumatique comportant un stratifié tel que défini ci-dessus.

De plus, l'invention concerne également l'utilisation dans un objet pneumatique d'un stratifié tel que défini ci-dessus.

L'invention concerne plus particulièrement les stratifiés tels que définis ci-dessus, utilisés dans des pneumatiques destinés à équiper des véhicules sans moteur tels que les bicyclettes, ou des véhicules à moteur de type tourisme, SUV ("Sport Utility Vehicles"), deux roues (notamment motos), avions, comme des véhicules industriels choisis parmi camionnettes, « Poids-lourd » - c'est-à-dire métro, bus, engins de transport routier (camions, tracteurs, remorques), véhicules hors-la-route tels qu'engins agricoles ou de génie civil -, autres véhicules de transport ou de manutention.

L'invention ainsi que ses avantages seront aisément compris à la lumière de la description et des exemples de réalisation qui suivent.

### DESCRIPTION DETAILLEE DE L'INVENTION

Dans la présente description, sauf indication expresse différente, tous les pourcentages (%) indiqués sont des pourcentages en masse.

Par ailleurs, le terme « pce » (en anglais « phr ») signifie au sens de la présente demande de brevet, partie en poids pour cent parties d'élastomère, thermoplastiques et diéniques confondus. Au sens de la présente invention, les élastomères thermoplastiques (TPE) font partie des élastomères.

D'autre part, tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de a jusqu'à b (c'est-à-dire incluant les bornes strictes a et b).

Pour les besoins de la présente invention, il est précisé que dans la présente demande de brevet, on dénomme « couche élastomère thermoplastique » ou « couche TPE » une couche élastomérique comprenant, en poids, une plus grande quantité d'élastomère(s) thermoplastique(s) que d'élastomère(s) diénique(s) ; et on dénomme « couche diénique » une couche élastomérique comprenant, en poids, une plus grande quantité d'élastomère(s) diénique(s) que d'élastomère(s) thermoplastique(s).

Le stratifié selon l'invention présente une excellente adhésion entre les deux couches, dénommées pour le besoin de clarté de l'invention première et deuxième couches (ou respectivement, couche élastomère thermoplastique et couche diénique). Ainsi, selon l'invention, une couche élastomère thermoplastique telle que définie ci-dessus peut adhérer avec une couche diénique telle que définie ci-dessus, grâce à la présence d'une certaine quantité de TPE à blocs SBR et PS dans cette couche diénique, par sa compatibilité avec le TPE à blocs SBR et PS dans la couche élastomère thermoplastique.

Les détails de l'invention seront explicités ci-dessous, par la description dans un premier temps, des constituants communs éventuels des deux couches du stratifié de l'invention puis, dans un deuxième temps, par la description des éléments spécifiques de chacune des couches du stratifié de l'invention, et enfin par la description de l'adhésion entre les deux couches du stratifié selon l'invention.

### I- Constituants communs possibles des couches du stratifié multicouche

Le stratifié multicouche selon l'invention a pour caractéristique essentielle d'être pourvu d'au moins deux couches élastomériques dites « couche élastomère thermoplastique » et « couche diénique » de formulations différentes, lesdites couches dudit stratifié multicouche comprenant au moins un élastomère thermoplastique TPE à blocs SBR et PS tel que défini ci-après. En plus du TPE, au moins la couche diénique comprend également un élastomère diénique tel que défini ci-après.

En plus des élastomères, les couches du stratifié multicouche de l'invention peuvent comprendre d'autres composants, non essentiels, et préférentiellement présents ou non, parmi lesquels on peut citer notamment ceux qui sont présentés ci-dessous, avec les élastomères discutés précédemment.

### I-1. Elastomère thermoplastique (TPE) spécifique à blocs SBR et PS

De manière générale, les élastomères thermoplastiques (en abrégé « TPE ») ont une structure intermédiaire entre polymères thermoplastiques et élastomères. Ce sont des copolymères à blocs, constitués de blocs rigides, thermoplastiques, reliés par des blocs souples, élastomères.

Pour les besoins de l'invention, ledit élastomère thermoplastique spécifique est un copolymère bloc comprenant au moins un bloc élastomère de type copolymère statistique butadiène-styrène (SBR) éventuellement hydrogéné et au moins un bloc thermoplastique de type copolymère styrénique (PS). Dans ce qui suit, lorsqu'il est fait référence à un bloc SBR, il s'agit donc d'un bloc élastomérique majoritairement (c'est-à-dire à plus de 50% en poids, de préférence à plus de 80 % en poids et très préférentiellement à 100% en poids) composé d'un copolymère statistique de butadiène et de styrène, ce copolymère pouvant ou non être hydrogéné, et, lorsqu'il est fait référence à un bloc styrénique, il s'agit d'un bloc composé majoritairement (c'est-à-dire à plus de 50% en poids, de préférence à plus de 80 % en poids et très préférentiellement à 100% en poids) d'un polymère styrénique tel qu'un polystyrène.

### 1.1.1. Structure du TPE à blocs SBR et PS

La masse moléculaire moyenne en nombre (notée Mn) du TPE à blocs SBR et PS est préférentiellement comprise entre 30 000 et 500 000 g/mol, plus préférentiellement comprise entre 40 000 et 400 000 g/mol. En dessous des minima indiqués, la cohésion entre les chaînes d'élastomère SBR du TPE à blocs SBR et PS, notamment en raison de sa dilution éventuelle (en présence d'une huile d'extension), risque d'être affectée ; d'autre part, une augmentation de la température d'usage risque d'affecter les propriétés mécaniques, notamment les propriétés à la rupture, avec pour conséquence une performance diminuée "à chaud". Par ailleurs, une masse Mn trop élevée peut être pénalisante pour la mise en oeuvre. Ainsi, on a constaté qu'une valeur comprise dans un domaine de 50 000 à 300 000 g/mol et mieux, de 60000 à 150 000 était particulièrement bien adaptée à un stratifié pour pneumatique, notamment un stratifié pour pneumatique comprenant une bande de roulement de pneumatique.

La masse moléculaire moyenne en nombre (Mn) de l'élastomère TPE à blocs SBR et PS est déterminée de manière connue, par chromatographie d'exclusion stérique (SEC). Par exemple dans le cas des élastomères thermoplastiques styréniques, l'échantillon est préalablement solubilisé dans du tétrahydrofuranne à une concentration d'environ 1 g/l ; puis la solution est filtrée sur filtre de porosité 0,45 µm avant injection. L'appareillage utilisé est une chaîne chromatographique « WATERS alliance ». Le solvant d'élution est le tétrahydrofuranne, le débit de 0,7 ml/min, la température du système de 35°C et la durée d'analyse de 90 min. On utilise un jeu de quatre colonnes WATERS en série, de dénominations commerciales « STYRAGEL » (« HMW7 », « HMW6E » et deux « HT6E »). Le volume injecté de la solution de l'échantillon de polymère est de 100 µl. Le détecteur est un réfractomètre différentiel « WATERS 2410 » et son logiciel associé d'exploitation des données chromatographiques est le système « WATERS MILLENIUM ». Les masses molaires moyennes calculées sont relatives à une courbe d'étalonnage réalisée avec des étalons de polystyrène. Les conditions sont adaptables par l'homme du métier.

La valeur de l'indice de polydispersité Ip (rappel : Ip = Mw/Mn avec Mw masse moléculaire moyenne en poids et Mn masse moléculaire moyenne en nombre) du TPE à blocs SBR et PS est de préférence inférieure à 3 ; plus préférentiellement inférieure à 2 et encore plus préférentiellement inférieure à 1,5.

De manière connue, les TPE à blocs SBR et PS présentent deux pics de température de transition vitreuse (Tg, mesurée selon ASTM D3418), la température la plus basse étant relative à la partie élastomère SBR du TPE à blocs SBR et PS, et la température la plus haute étant relative à la partie thermoplastique PS du TPE à blocs SBR et PS. Ainsi, les blocs souples SBR des TPE à blocs SBR et PS se définissent par une Tg inférieure à la température ambiante (25°C), tandis que les blocs rigides PS ont une Tg supérieure à 80°C.

Dans la présente demande, lorsqu'il est fait référence à la température de transition vitreuse du TPE à blocs SBR et PS, il s'agit de la Tg relative au bloc élastomère SBR. Le TPE à blocs SBR et PS présente préférentiellement une température de transition vitreuse ("Tg") qui est préférentiellement inférieure ou égale à 25°C, plus préférentiellement inférieure ou égale à 10°C. Une valeur de Tg supérieure à ces minima peut diminuer les performances de la bande de roulement lors d'une utilisation à très basse température ; pour une telle utilisation, la Tg du TPE à blocs SBR et PS est plus préférentiellement encore inférieure ou égale à -10°C. De manière préférentielle également, la Tg du TPE à blocs SBR et PS est supérieure à -100°C.

Les TPE à blocs SBR et PS peuvent être des copolymères avec un petit nombre de blocs (moins de 5, typiquement 2 ou 3), auquel cas ces blocs ont de préférence des masses élevées, supérieures à 15000 g/mol. Ces TPE à blocs SBR et PS peuvent être par exemple des copolymères diblocs, comprenant un bloc thermoplastique et un bloc élastomère. Ce sont souvent aussi des élastomères triblocs avec deux segments rigides reliés par un segment souple. Les segments rigides et souples peuvent être disposés linéairement, en étoile ou branchés. Typiquement, chacun de ces segments ou blocs contient souvent au minimum plus de 5, généralement plus de 10 unités de base (par exemple unités styrène et unités butadiène/styrène pour un copolymère blocs styrène/ SBR/ styrène).

Les TPE à blocs SBR et PS peuvent aussi comprendre un grand nombre de blocs (plus de 30, typiquement de 50 à 500) plus petits, auquel cas ces blocs ont de préférence des masses peu élevées, par exemple de 500 à 5000 g/mol, ces TPE à blocs SBR et PS seront appelés TPE à blocs SBR et PS multiblocs par la suite, et sont un enchaînement blocs élastomères - blocs thermoplastiques.

Selon une première variante, le TPE à blocs SBR et PS se présente sous une forme linéaire. Par exemple, le TPE à blocs SBR et PS est un copolymère dibloc : bloc PS / bloc SBR. Le TPE à blocs SBR et PS peut aussi être un copolymère tribloc : bloc PS / bloc SBR / bloc PS, c'est-à-dire un bloc élastomère central et de deux blocs thermoplastiques terminaux, à chacune des deux extrémités du bloc élastomère. Egalement, le TPE à blocs SBR et PS multibloc peut être un enchaînement linéaire de blocs élastomères SBR - blocs thermoplastiques PS.

Selon une autre variante de l'invention, le TPE à blocs SBR et PS utile pour les besoins de l'invention se présente sous une forme étoilée à au moins trois branches. Par exemple, le TPE à blocs SBR et PS peut alors se composer d'un bloc élastomère SBR étoilé à au moins trois branches et d'un bloc thermoplastique PS, situé à l'extrémité de chacune des branches du bloc élastomère SBR. Le nombre de branches de l'élastomère central peut varier, par exemple de 3 à 12, et de préférence de 3 à 6.

Selon une autre variante de l'invention, le TPE à blocs SBR et PS se présente sous une forme branchée ou dendrimère. Le TPE à blocs SBR et PS peut alors se composer d'un bloc élastomère SBR branché ou dendrimère et d'un bloc thermoplastique PS, situé à l'extrémité des branches du bloc élastomère dendrimère.

### 1.1.2. Nature des blocs élastomères

Les blocs élastomères du TPE à blocs SBR et PS pour les besoins de l'invention, peuvent être tous les élastomères de type copolymère statistique de butadiène et de styrène (SBR) connus de l'homme de l'art.

La fraction de bloc élastomère SBR dans le TPE à blocs SBR et PS est comprise dans un domaine allant de 30 à 95 %, préférentiellement de 40 à 92 %, plus préférentiellement de 50 à 90%.

Ces blocs SBR possèdent de préférence une Tg (température de transition vitreuse) mesurée par DSC selon la norme ASTM D3418 de 1999, inférieure à 25°C, préférentiellement inférieure à 10°C, plus préférentiellement inférieure à 0°C et très préférentiellement inférieure à -10°C. De manière préférentielle également, la Tg des blocs SBR est supérieure à -100°C. Conviennent notamment, les blocs SBR ayant une Tg comprise entre 20°C et -70°C et plus particulièrement entre 0°C et -50°C.

De manière bien connue, le bloc SBR comprend une teneur en styrène, une teneur en liaisons -1,2 de la partie butadiénique, et une teneur en liaisons -1,4 de la partie butadiénique, cette dernière se composant d'une teneur en liaisons trans-1,4 et d'une teneur en liaisons cis-1,4 lorsque la partie butadiénique n'est pas hydrogénée.

De manière préférentielle, on utilise notamment un bloc SBR ayant une teneur en styrène comprise, par exemple dans un domaine allant de 10 à 60% en poids, de préférence de 20% à 50% en poids, et pour la partie butadiénique, une teneur en liaisons -1,2 comprise dans un domaine allant de 4% à 75% (% molaire), et une teneur en liaisons -1,4 comprise dans un domaine allant de 20% et 96% (% molaire).

Selon le taux d'hydrogénation du bloc SBR, la teneur en double liaison de la partie butadiénique du bloc SBR peut diminuer jusqu'à une teneur de 0% molaire pour un bloc SBR totalement hydrogéné.

De préférence, dans les TPE à blocs SBR et PS utiles à la première couche du stratifié de l'invention, le bloc élastomère SBR est hydrogéné de telle manière qu'une proportion allant de 25 à 100 % molaire des doubles liaisons dans la portion butadiène sont hydrogénées. Plus préférentiellement de 50 à 100% molaire et de manière très préférentielle de 80 à 100% molaire des doubles liaisons dans la portion butadiène sont hydrogénées.

De préférence, dans les TPE à blocs SBR et PS utiles à la deuxième couche du stratifié de l'invention, le bloc élastomère SBR est hydrogéné de telle manière qu'une proportion allant de 0 à 80 % molaire des doubles liaisons dans la portion butadiène sont hydrogénées. Plus préférentiellement de 20 à 70% molaire et de manière très préférentielle de 30 à 60% molaire des doubles liaisons dans la portion butadiène sont hydrogénées.

Au sens de la présente invention, la partie styrénique des blocs SBR peut être composée par des monomères choisis parmi les monomères styréniques, et notamment choisis dans le groupe constitué par le styrène non substitué, les styrènes substitués et leurs mélanges. Parmi les styrènes substitués, on choisira préférentiellement ceux choisis dans le groupe constitué par les méthylstyrènes (préférentiellement l'o-méthylstyrène, le m-méthylstyrène et le p-méthylstyrène, l'alpha-méthylstyrène, l'alpha-2-diméthylstyrène, l'alpha-4-diméthylstyrène et le diphényléthylène), le para-tertio-butylstyrène, les chlorostyrènes (préférentiellement l'o-chlorostyrène, le m-chlorostyrène, le p-chlorostyrène, le 2,4-dichlorostyrène, le 2,6-dichlorostyrène et le 2,4,6-trichlorostyrène), les bromostyrènes (préférentiellement l'o-bromostyrène, le m-bromostyrène, le p-bromostyrène, le 2,4-dibromostyrène, le 2,6-dibromostyrène et les 2,4,6-tribromostyrène), les fluorostyrènes (préférentiellement l'o-fluorostyrène, le m-fluorostyrène, le p-fluorostyrène, le 2,4-difluorostyrène, le 2,6-difluorostyrène et les 2,4,6-trifluorostyrène), le para-hydroxy-styrène, et les mélanges de ces derniers.

Selon un mode de réalisation préférentiel de l'invention, les blocs élastomères du TPE à blocs SBR et PS présentent au total, une masse moléculaire moyenne en nombre ("Mn") allant de 25 000 g/mol à 350 000g/mol, de préférence de 35 000 g/mol à 250 000 g/mol de manière à conférer au TPE à blocs SBR et PS de bonnes propriétés élastomériques et une tenue mécanique suffisante et compatible avec l'utilisation en bande de roulement de pneumatique.

Le bloc élastomère peut également être constitué de plusieurs blocs élastomères tels que définis ci-dessus.

### 1.1.3. Nature des blocs thermoplastiques

On utilisera pour la définition des blocs thermoplastiques la caractéristique de température de transition vitreuse (Tg) du bloc rigide thermoplastique. Cette caractéristique est bien connue de l'homme du métier. Elle permet notamment de choisir la température de mise en oeuvre industrielle (transformation). Dans le cas d'un polymère (ou d'un bloc de polymère) amorphe, la température de mise en oeuvre est choisie sensiblement supérieure à la Tg. Dans le cas spécifique d'un polymère (ou d'un bloc de polymère) semi-cristallin, on peut observer une température de fusion alors supérieure à la température de transition vitreuse. Dans ce cas, c'est plutôt la température de fusion (Tf) qui permet de choisir la température de mise en oeuvre du polymère (ou bloc de polymère) considéré. Ainsi, par la suite, lorsqu'on parlera de « Tg (ou Tf, le cas échéant) », il faudra considérer qu'il s'agit de la température utilisée pour choisir la température de mise oeuvre.

Pour les besoins de l'invention, les élastomères TPE à blocs SBR et PS comprennent un ou plusieurs bloc(s) thermoplastique(s) ayant de préférence une Tg (ou Tf, le cas échéant) supérieure ou égale à 80°C et constitué(s) à partir de monomères styréniques polymérisés (PS). Préférentiellement, ce bloc thermoplastique a une Tg (ou Tf, le cas échéant) comprise dans un domaine variant de 80°C à 250°C. De préférence, la Tg (ou Tf, le cas échéant) de ce bloc thermoplastique est préférentiellement de 80°C à 200°C, plus préférentiellement de 80°C à 180°C.

La fraction de bloc thermoplastique PS dans le TPE à blocs SBR et PS est comprise dans un domaine allant de 5 à 70 %, préférentiellement de 8 à 60 %, plus préférentiellement de 10 à 50%.

Les blocs thermoplastiques du TPE à blocs SBR sont des blocs polystyrènes. Les polystyrènes préférentiels sont obtenus à partir de monomères styréniques choisis dans le groupe constitué par le styrène non substitué, les styrènes substitués et leurs mélanges. Parmi les styrènes substitués, on choisira préférentiellement ceux choisis dans le groupe constitué par les méthylstyrènes (préférentiellement l'o-méthylstyrène, le m-méthylstyrène et le p-méthylstyrène, l'alpha-méthylstyrène, l'alpha-2-diméthylstyrène, l'alpha-4-diméthylstyrène et le diphényléthylène), le para-tertio-butylstyrène, les chlorostyrènes (préférentiellement l'o-chlorostyrène, le m-chlorostyrène, le p-chlorostyrène, le 2,4-dichlorostyrène, le 2,6-dichlorostyrène et le 2,4,6-trichlorostyrène), les bromostyrènes (préférentiellement l'o-bromostyrène, le m-bromostyrène, le p-bromostyrène, le 2,4-dibromostyrène, le 2,6-dibromostyrène et le 2,4,6-tribromostyrène), les fluorostyrènes (préférentiellement l'o-fluorostyrène, le m-fluorostyrène, le p-fluorostyrène, le 2,4-difluorostyrène, le 2,6-difluorostyrène et le 2,4,6-trifluorostyrène), le para-hydroxy-styrène, et les mélanges de ces derniers.

De manière très préférentielle, les blocs thermoplastiques du TPE à blocs SBR sont des blocs obtenus à partir de polystyrène non substitué.

Selon une variante de l'invention, le bloc polystyrène tel que défini ci-dessus peut être copolymérisé avec au moins un autre monomère de manière à former un bloc thermoplastique ayant une Tg (ou Tf, le cas échéant) telle que définie ci-dessus.

A titre d'illustration, cet autre monomère susceptible de copolymériser avec le monomère polymérisé, peut être choisi parmi les monomères diènes, plus particulièrement, les monomères diènes conjugués ayant 4 à 14 atomes de carbone, et les monomères de type vinylaromatiques ayant de 8 à 20 atomes de carbone.

Selon l'invention, les blocs thermoplastiques du TPE à blocs SBR et PS présentent au total, une masse moléculaire moyenne en nombre ("Mn") allant de 5 000 g/mol à 150 000g/mol, de manière à conférer au TPE à blocs SBR et PS de bonnes propriétés élastomériques et une tenue mécanique suffisante et compatible avec l'utilisation en bande de roulement de pneumatique.

Le bloc thermoplastique peut également être constitué de plusieurs blocs thermoplastiques tels que définis ci-dessus.

### 1.1.4. Exemples de TPE à blocs SBR et PS

A titre d'exemples d'élastomères TPE à blocs SBR et PS commercialement disponibles, on peut citer les élastomères de type SOE, commercialisés par la société Asahi Kasei sous la dénomination « SOE S1611 » « SOE L605 » ou encore « SOE L606 ».

### 1.1.5. Quantité de TPE à blocs SBR et PS dans chacune des couches

La quantité de TPE à blocs SBR et PS dans chacune des couches du stratifié pour pneumatique est explicité plus bas dans la description spécifique de chacune des couches.

### I-2 Elastomère diénique

Le ou les élastomères thermoplastiques décrits précédemment sont suffisants à eux seuls pour que soit utilisable la couche élastomère thermoplastique du stratifié multicouche selon l'invention, cependant, des élastomères diéniques peuvent être utilisés dans cette couche élastomère thermoplastique, et pour ce qui est de la couche diénique, cette dernière comprend plus d'élastomère(s) diénique(s) que d'élastomère(s) thermoplastique(s).

Ainsi, le stratifié multicouche selon l'invention, comporte au moins un (c'est-à-dire un ou plusieurs) élastomère diénique, pouvant être utilisé seul, ou en coupage avec au moins un (c'est-à-dire un ou plusieurs) autre élastomère (ou caoutchouc) diénique.

Le taux d'élastomère diénique, optionnel ou non dans chacune des couches du stratifié de l'invention sera explicité plus loin avec les spécificités de chacune des couches du stratifié de l'invention.

Par élastomère ou caoutchouc « diénique », doit être compris de manière connue un (on entend un ou plusieurs) élastomère issu au moins en partie (i.e. un homopolymère ou un copolymère) de monomères diènes (monomères porteurs de deux doubles liaisons carbone - carbone, conjuguées ou non).

Ces élastomères diéniques peuvent être classés dans deux catégories : "essentiellement insaturés" ou "essentiellement saturés".

On entend en général par "essentiellement insaturé", un élastomère diénique issu au moins en partie de monomères diènes conjugués, ayant un taux de motifs ou unités d'origine diénique (diènes conjugués) qui est supérieur à 15% (% en mole). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

C'est ainsi que des élastomères diéniques tels que certains caoutchoucs butyl ou les copolymères de diènes et d'alpha oléfines type EPDM peuvent être qualifiés d'élastomères diéniques "essentiellement saturés" (taux de motifs d'origine diénique faible ou très faible, toujours inférieur à 15%).

Ces définitions étant données, on entend plus particulièrement par élastomère diénique, quelle que soit la catégorie ci-dessus, susceptible d'être utilisé dans les compositions conformes à l'invention:
(a) - tout homopolymère obtenu par polymérisation d'un monomère diène conjugué ayant de 4 à 12 atomes de carbone;
(b) - tout copolymère obtenu par copolymérisation d'un ou plusieurs diènes conjugués entre eux ou avec un ou plusieurs composés vinyle aromatique ayant de 8 à 20 atomes de carbone;
(c) - un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
(d) - un copolymère d'isobutène et d'isoprène (caoutchouc diénique butyl), ainsi que les versions halogénées, en particulier chlorées ou bromées, de ce type de copolymère.

Tout type d'élastomère diénique peut être utilisé dans l'invention. Lorsque la composition contient un système de vulcanisation, on utilise de préférence, des élastomères essentiellement insaturés, en particulier des types (a) et (b) ci-dessus, pour la fabrication du stratifié multicouche selon la présente invention.

A titre de diènes conjugués conviennent notamment le butadiène-1,3, le 2-méthyl-1,3-butadiène, les 2,3-di(alkyle en C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. A titre de composés vinylaromatiques conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinylaromatiques. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent par exemple être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que benzophénone par exemple ; pour un couplage à une charge inorganique renforçante telle que silice, on peut citer par exemple des groupes fonctionnels silanol ou polysiloxane ayant une extrémité silanol (tels que décrits par exemple dans FR 2 740 778 ou US 6 013 718), des groupes alkoxysilane (tels que décrits par exemple dans FR 2 765 882 ou US 5 977 238), des groupes carboxyliques (tels que décrits par exemple dans WO 01/92402 ou US 6 815 473, WO 2004/096865 ou US 2006/0089445) ou encore des groupes polyéthers (tels que décrits par exemple dans EP 1 127 909 ou US 6 503 973). Comme autres exemples d'élastomères fonctionnalisés, on peut citer également des élastomères (tels que SBR, BR, NR ou IR) du type époxydés.

### I-3. Charges nanométriques (ou renforçantes) et micrométriques (ou non renforçantes)

Les élastomères décrits précédemment sont suffisants à eux seuls pour que soit utilisable le stratifié multicouche selon l'invention, néanmoins une charge renforçante peut être utilisée dans la composition, et notamment dans la couche diénique ou deuxième couche du stratifié de l'invention.

Lorsqu'une charge renforçante est utilisée, on peut utiliser tout type de charge habituellement utilisée pour la fabrication de pneumatiques, par exemple une charge organique telle que du noir de carbone, une charge inorganique telle que de la silice, ou encore un coupage de ces deux types de charge, notamment un coupage de noir de carbone et de silice. Préférentiellement, notamment dans la deuxième couche, la silice est utilisée comme charge renforçante majoritaire.

Lorsqu'une charge renforçante inorganique est utilisée, on peut par exemple utiliser de manière connue un agent de couplage (ou agent de liaison) au moins bifonctionnel destiné à assurer une connexion suffisante, de nature chimique et/ou physique, entre la charge inorganique (surface de ses particules) et l'élastomère, en particulier des organosilanes ou des polyorganosiloxanes bifonctionnels.

De la même manière, la composition des couches du stratifié multicouche de l'invention, peut contenir une ou plusieurs charges micrométriques, dites « non renforçantes » ou inertes, telles que les charges lamellaires connues de l'homme de l'art.

### 1.4. Résine PPE

Les élastomères décrits précédemment sont suffisants à eux seuls pour que soit utilisable le stratifié multicouche selon l'invention, néanmoins une résine PPE peut être utilisée dans la composition, et notamment dans la couche élastomère thermoplastique du stratifié de l'invention.

Ainsi, de manière préférentielle, et notamment dans la première couche, le stratifié selon l'invention peut comprendre en outre une résine thermoplastique à base de motifs polyphénylène éther éventuellement substitués (en abrégé « résine PPE »). Ce type de composé est décrit par exemple dans l'encyclopédie « Ullmann's encyclopédia of industrial chemistry » éditée par VCH, vol A 21, pages 605-614, 5e édition, 1992.

La résine PPE utile aux besoins de l'invention présente préférentiellement une température de transition vitreuse (Tg), mesurée par DSC selon la norme ASTM D3418 de 1999 comprise dans un domaine allant de 0 à 215°C, de préférence de 5 à 200°C et plus préférentiellement de 5 à 185°C. En dessous de 0°C, la résine PPE ne permet pas un décalage de Tg suffisant dans la composition la comprenant et au-dessus de 215°C, on peut rencontrer des problèmes de fabrication notamment pour obtenir un mélange homogène.

De préférence, la résine PPE est un composé comprenant majoritairement des motifs polyphénylène de formule générale (I) : 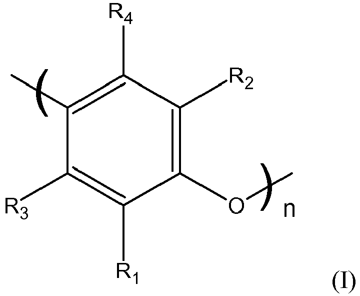 dans laquelle :
- R1, R2, R3 et R4 représentent indépendamment les uns des autres des groupements identiques ou différents choisis parmi l'hydrogène ; les groupements hydroxy, alkoxy, halogène, amino, alkylamino, dialkylamino ; les groupements hydrocarbonés comportant au moins 2 atomes de carbone, éventuellement interrompus par des hétéroatomes et éventuellement substitués ; R1 et R3 d'une part et R2 et R4 d'autre part peuvent former ensemble avec les atomes de carbones auxquels ils se rattachent un ou plusieurs cycles accolés au cycle benzénique du composé de formule (I)
- n est un entier compris dans un domaine allant de 3 à 300.

Préférentiellement, R1, R2, R3 et R4 représentent indépendamment les uns des autres des groupements identiques ou différents choisis parmi :
- l'hydrogène
- les groupements hydroxy, alkoxy, halogène, amino, alkylamino, dialkylamino,
- les groupements alkyles linéaire, ramifiés ou cycliques, comprenant de 1 à 25 atomes de carbone (de préférence de 2 à 18), éventuellement interrompus par des hétéroatomes choisis parmi l'azote, l'oxygène et le soufre, et éventuellement substitués par des groupements hydroxy, alkoxy, amino, alkylamino, dialkylamino, ou halogène.
- les groupements aryles comprenant de 6 à 18 atomes de carbones (de préférence de 6 à 12), éventuellement substitués par des groupements hydroxy, alkoxy, amino, alkylamino, dialkylamino, alkyle, ou halogène,

Plus préférentiellement, R1, R2, R3 et R4 représentent indépendamment les uns des autres des groupements identiques ou différents choisis parmi :
- l'hydrogène
- les groupements hydroxy, alkoxy comportant de 1 à 6 atomes de carbone, halogène, amino, alkylamino comportant de 1 à 6 atomes de carbone, dialkylamino comportant de 2 à 12 atomes de carbone,
- les groupements alkyles linéaire, ramifiés ou cycliques, comprenant de 1 à 12 atomes de carbone (de préférence de 2 à 6), éventuellement interrompus par des hétéroatomes et éventuellement substitués par des groupements hydroxy, alkoxy comportant de 1 à 6 atomes de carbone, amino, alkylamino comportant de 1 à 6 atomes de carbone, dialkylamino comportant de 2 à 12 atomes de carbone, ou halogène.
- les groupements aryles comprenant de 6 à 18 atomes de carbones (de préférence de 6 à 12), éventuellement substitués par des groupements hydroxy, alkoxy comportant de 1 à 6 atomes, amino, alkylamino comportant de 1 à 6 atomes, dialkylamino comportant de 2 à 12 atomes de carbone, alkyle comportant de 1 à 12 atomes de carbone, ou halogène.

Encore plus préférentiellement, R1 et R2 représentent un groupement alkyle et en particulier un groupe méthyle ; et R3 et R4 représentent des atomes d'hydrogène. Dans ce cas, la résine PPE est un poly(2,6-diméthyl-1,4-phénylène éther).

De manière préférentielle également, n est un entier compris dans un domaine allant de 3 à 50, plus préférentiellement de 5 à 30, de préférence de 6 à 20.

De préférence, la résine PPE est un composé comprenant à plus de 80% en poids, et plus préférentiellement encore à plus de 95% en poids, des motifs polyphénylène de formule générale (I).

A titre d'exemples, on peut citer le poly(2,6-diméthyl-1,4-phénylène éther) et notamment le « Noryl SA 120 » de la société Sabic ou le « Xyron S202A » de la société Asahi Kasei.

De manière connue, les résines PPE ont par exemple et préférentiellement des masses moléculaires moyennes en nombre (Mn) variables, le plus souvent de 15000 à 30000 g/mol, dans le cas des hautes masses comme celles-ci, la Mn est mesurée de manière connue de l'homme de l'art par SEC (encore nommée GPC, comme dans la référence US4588806, colonne 8). Pour les besoins de l'invention, peut également et préférentiellement également utiliser pour la composition de l'invention une résine PPE possédant une masse Mn inférieure aux masses régulièrement rencontrées et notamment inférieure à 6000 g/mol, de préférence inférieure à 3500 g/mol et en particulier une Mn comprise dans un domaine variant de 700 à 2500 g/mol. La masse moléculaire moyenne en nombre (Mn) des PPE de masse inférieure à 6000 g/mol est mesurée par RMN, la mesure classique par SEC n'étant pas suffisamment précise. Cette mesure par RMN est effectuée de manière connue de l'homme de l'art, soit par dosage des fonctions bout de chaine, soit par dosage des initiateurs de polymérisation, comme explicité par exemple dans « Application of NMR spectroscopy in molecular weight determination of polymers » de Subhash C. Shit et Sukumar Maiti dans « European Polymer Journal » vol.22, n°12, pages 1001 à 1008 (1986).

Préférentiellement, la valeur de l'indice de polydispersité Ip (rappel : Ip = Mw/Mn avec Mw masse moléculaire moyenne en poids et Mn masse moléculaire moyenne en nombre) de la résine PPE est inférieure ou égale à 5, plus préférentiellement inférieure ou égale à 3 et plus préférentiellement encore inférieure ou égale à 2.

Le taux de résine PPE dans le stratifié et notamment dans la première couche est préférentiellement compris dans un domaine allant de 1 à 90 pce, plus préférentiellement de 2 à 80 pce, plus préférentiellement encore de 3 à 60 pce et très préférentiellement de 5 à 60 pce.

### I-5. Additifs divers

Le stratifié multicouche de l'invention peut comporter par ailleurs les divers additifs usuellement présents dans les couches élastomériques de pneumatique connues de l'homme du métier. On choisira par exemple un ou plusieurs additifs choisis parmi les agents de protection tels que antioxydants ou antiozonants, anti-UV, les divers agents de mise en oeuvre ou autres stabilisants, ou encore les promoteurs aptes à favoriser l'adhésion au reste de la structure du pneumatique. De manière préférentielle, la couche élastomère thermoplastique du stratifié multicouche ne contient pas tous ces additifs en même temps et préférentiellement dans certains cas, la couche élastomère thermoplastique du stratifié multicouche ne contient aucun de ces agents.

Egalement et à titre optionnel, la composition des couches du stratifié multicouche de l'invention peut contenir un système de réticulation connu de l'homme du métier. Préférentiellement, la composition de la couche élastomère thermoplastique du stratifié multicouche ne contient pas de système de réticulation.

Optionnellement également, la composition des couches du stratifié multicouche de l'invention peut contenir un agent plastifiant, tel qu'une huile d'extension (ou huile plastifiante) ou une résine plastifiante dont la fonction est de faciliter la mise en oeuvre du stratifié multicouche, particulièrement son intégration au pneumatique par un abaissement du module et une augmentation du pouvoir tackifiant.

Outre les élastomères précédemment décrits, les compositions du stratifié multicouche peuvent aussi comporter, toujours selon une fraction pondérale minoritaire par rapport à l'élastomère bloc, un ou plusieurs polymères thermoplastiques (non élastomériques), tels que ceux à base de polyéther.

### II- Stratifié multicouche

Comme indiqué précédemment, le stratifié multicouche de l'invention a donc pour caractéristique essentielle de comporter au moins deux couches adjacentes d'élastomère :
o une première couche, constituée d'une composition à base d'au moins un élastomère thermoplastique (TPE), ledit élastomère thermoplastique étant un copolymère bloc comprenant au moins un bloc élastomère de type copolymère statistique butadiène-styrène éventuellement hydrogéné et au moins un bloc thermoplastique de type styrénique, à un taux compris dans un domaine allant de plus de 50 à 100 pce (parties en poids pour 100 parties en poids d'élastomère) ;
o une deuxième couche, constituée d'une composition à base d'au moins un élastomère diénique, le taux d'élastomère diénique étant compris dans un domaine allant de plus de 50 à 95 pce, et d'au moins un élastomère thermoplastique (TPE), ledit élastomère thermoplastique étant un copolymère bloc comprenant au moins un bloc élastomère de type copolymère statistique butadiène-styrène éventuellement hydrogéné et au moins un bloc thermoplastique de type styrénique, à un taux compris dans un domaine allant de 5 à moins de 50 pce.

### II-1. Première couche ou couche élastomère thermoplastique

A titre de première couche, élastomère thermoplastique, est utilisée une composition élastomérique comportant plus de 50 pce d'élastomère TPE à blocs SBR et PS tel que défini précédemment, avec toutes les préférences de structure, de nature chimique des blocs thermoplastiques et élastomériques exprimées précédemment.

La couche élastomère thermoplastique décrite ci-dessus pourrait éventuellement comporter d'autres élastomères que les TPE, les élastomères diéniques, dans une quantité minoritaire (au plus 50 pce). De tels élastomères diéniques sont définis ci-dessus, et la composition de la couche élastomère thermoplastiques peut éventuellement et de manière préférentielle comprendre également d'autres composants tels que ceux présentés ci-dessus et éventuellement communs avec la deuxième couche du stratifié de l'invention. Parmi eux, il y a notamment la résine PPE.

De préférence, le taux de TPE à blocs SBR et PS dans la première couche est compris dans un domaine allant de 70 à 100 pce, en particulier compris dans un domaine allant de 80 à 100 pce.

Toutefois, selon un mode de réalisation particulièrement préférentiel, le ou les TPE à blocs SBR et PS, sont les seuls élastomères présents dans la couche élastomère thermoplastique ; en conséquence, dans un tel cas, à un taux égal à 100 pce.

Optionnellement et de manière préférentielle, la première couche peut éventuellement et de manière préférentielle comprendre également d'autres composants tels que ceux présentés ci-dessus et éventuellement communs avec la deuxième couche du stratifié de l'invention. Parmi eux, il y a notamment la résine PPE.

### II-2. Deuxième couche ou couche diénique

A titre de deuxième couche est utilisée, en combinaison avec la première couche, une composition élastomère dont la caractéristique essentielle est de comporter une quantité variant de 5 à moins de 50 pce de TPE à blocs SBR et PS, en remplacement d'une partie de l'élastomère diénique. Ainsi, le taux d'élastomère diénique dans cette deuxième couche est compris entre 50 et 95 pce. En dessous du taux minimum de TPE à blocs SBR et PS, l'effet adhésif n'est pas suffisant tandis qu'au-delà du maximum préconisé, les propriétés de la couche diénique sont trop altérées par la forte présence de TPE à blocs SBR et PS.

Selon un autre mode de réalisation préférentiel de l'invention, le taux de TPE à blocs SBR et PS (c'est-à-dire le taux total s'il y a plusieurs TPE) est compris dans un domaine variant de 5 à 49 pce, plus préférentiellement de 10 à 49 pce. Par conséquent, le taux d'élastomère diénique (c'est-à-dire le taux total s'il y en a plusieurs) est préférentiellement compris dans un domaine allant de 51 à 95 pce et plus préférentiellement de 51 à 90 pce.

Optionnellement et de manière préférentielle, la deuxième couche peut éventuellement et de manière préférentielle comprendre également d'autres composants tels que ceux présentés ci-dessus et éventuellement communs avec la première couche du stratifié de l'invention. Parmi eux, il y a notamment la charge renforçante.

### III- Adhésion des deux couches du stratifié

On a constaté que l'adhésion de la première couche à la deuxième couche dans le stratifié de l'invention, est nettement améliorée par rapport à l'adhésion d'une couche du type de la première couche du stratifié de l'invention à une couche diénique conventionnelle (c'est à dire dépourvue d'élastomère thermoplastique).

Cette adhésion s'exprime par la compatibilité des TPE à blocs SBR et PS présents dans les couches du stratifié de l'invention.

### IV- Utilisation du stratifié dans un pneumatique

Le stratifié de l'invention peut être utilisé dans tout type de pneumatique. Il est particulièrement bien adapté à une utilisation dans un pneumatique, produit fini de pneumatique ou semi-fini de pneumatique, en caoutchouc, tout particulièrement dans un bandage pneumatique pour véhicule automobile tel qu'un véhicule de type deux roues, tourisme ou industriel, ou non automobile tel que vélo.

Le stratifié de l'invention peut être fabriqué en associant les couches du stratifié avant la cuisson, ou même après la cuisson. Plus précisément, la couche élastomère thermoplastique ne nécessitant pas de cuisson, elle peut être associée à la couche diénique du stratifié de l'invention avant ou après la cuisson de cette couche diénique, qui elle nécessite une cuisson avant d'être utilisée en pneumatique.

Le stratifié multicouche de l'invention est avantageusement utilisable dans les bandages pneumatiques de tous types de véhicules, en particulier dans les bandages pour véhicules tourisme susceptibles de rouler à très haute vitesse ou les bandages pour véhicules industriels tels que poids-lourd.

### V. Préparation du stratifié

Le stratifié multicouche de l'invention est préparé selon les méthodes connues de l'homme de l'art, en préparant séparément les deux couches du stratifié, puis en associant la couche élastomère thermoplastique à la couche diénique, avant ou après la cuisson de cette dernière. L'association de la couche élastomère thermoplastique à la couche diénique peut se faire sous l'action de chaleur et éventuellement de pression

### V-1. Préparation de la couche élastomère thermoplastique

La couche élastomère thermoplastique du stratifié multicouche de l'invention est préparée de façon classique, par exemple, par incorporation des différents composants dans une extrudeuse bi-vis, de façon à réaliser la fusion de la matrice et une incorporation de tous les ingrédients, puis utilisation d'une filière plate permettant de réaliser la couche élastomère thermoplastique. Plus généralement, la mise en forme du TPE à blocs SBR et PS peut être faite par toute méthode connue de l'homme du métier : extrusion, calandrage, extrusion soufflage, injection, cast film.

### V-2. Préparation de la couche diénique

La couche diénique du stratifié multicouche de l'invention est préparée dans des mélangeurs appropriés, en utilisant deux phases de préparation successives selon une procédure générale bien connue de l'homme du métier : une première phase de travail ou malaxage thermomécanique (parfois qualifiée de phase "non-productive") à haute température, jusqu'à une température maximale comprise entre 130°C et 200°C, de préférence entre 145°C et 185°C, suivie d'une seconde phase de travail mécanique (parfois qualifiée de phase "productive") à plus basse température, typiquement inférieure à 120°C, par exemple entre 60°C et 100°C, phase de finition au cours de laquelle est incorporé le système de réticulation ou vulcanisation.

Selon un mode de réalisation préférentiel de l'invention, tous les constituants de base des compositions de l'invention, à l'exception du système de vulcanisation, tels que les élastomères TPE à blocs SBR et PS, les éventuelles charges, sont incorporés de manière intime, par malaxage, à l'élastomère diénique au cours de la première phase dite non-productive, c'est-à-dire que l'on introduit dans le mélangeur et que l'on malaxe thermomécaniquement, en une ou plusieurs étapes, au moins ces différents constituants de base jusqu'à atteindre la température maximale comprise entre 130°C et 200°C, de préférence comprise entre 145°C et 185°C.

A titre d'exemple, la première phase (non-productive) est conduite en une seule étape thermomécanique au cours de laquelle on introduit, dans un mélangeur approprié tel qu'un mélangeur interne usuel, tous les constituants nécessaires, les éventuels agents de recouvrement ou de mise en oeuvre complémentaires et autres additifs divers, à l'exception du système de vulcanisation. La durée totale du malaxage, dans cette phase non-productive, est de préférence comprise entre 1 et 15 min. Après refroidissement du mélange ainsi obtenu au cours de la première phase non-productive, on incorpore alors le système de vulcanisation à basse température, généralement dans un mélangeur externe tel qu'un mélangeur à cylindres; le tout est alors mélangé (phase productive) pendant quelques minutes, par exemple entre 2 et 15 min.

La composition finale ainsi obtenue est ensuite calandrée par exemple sous la forme d'une couche dénommée dans la présente invention couche diénique.

### V-3. Préparation du stratifié

Le stratifié multicouche de l'invention est préparé par association de la couche élastomère thermoplastique à la couche diénique, avant ou après cuisson de cette dernière. Avant cuisson, cela consiste à poser la couche élastomère thermoplastique sur la couche diénique pour former le stratifié de l'invention puis procéder à la cuisson du stratifié ou du pneumatique muni dudit stratifié. Après cuisson, la couche élastomère thermoplastique est déposée sur la couche de diénique déjà cuite. Pour que l'adhésion puisse s'établir, il faut une température à l'interface supérieure à la température de mise en oeuvre du TPE, elle-même supérieure à la température de transition vitreuse (Tg) et, dans le cas d'un bloc thermoplastique semi cristallin, à la température de fusion (Tf) dudit TPE, éventuellement associée à l'application de pression.

### VI- Exemples

### VI-1. Préparation des exemples

Les exemples de stratifié multicouche de l'invention sont préparés comme indiqué précédemment.

### VI-2. Description des tests utilisés

Les exemples de stratifié multicouche du pneumatique de l'invention sont testés quant à l'adhésion de la couche TPE à la couche diénique selon un test dit de pelage.

Les éprouvettes de pelage sont réalisées par mise en contact des couches suivantes du stratifié : couche diénique renforcée par un tissu (de façon à limiter la déformation desdites couches sous traction) / couche TPE / couche diénique renforcée par un tissu. Dans cet empilement symétrique, une amorce de rupture est insérée entre la couche TPE et une des couches diéniques adjacentes.

L'éprouvette de stratifié une fois assemblée est portée à 160°C sous pression pendant 27 minutes. Des bandes de 30 mm de largeur ont été découpées au massicot. Les deux côtés de l'amorce de rupture ont été ensuite placées dans les mors d'un machine de traction de marque Intron®. Les essais sont réalisés à une température de 100°C et à une vitesse de traction de 100 mm/min. On enregistre les efforts de traction et on norme ceux-ci par la largeur de l'éprouvette. On obtient une courbe de force par unité de largeur (en N/mm) en fonction du déplacement de traverse mobile de la machine de traction (entre 0 et 200 mm). La valeur d'adhésion retenue correspond à l'initiation de la rupture au sein de l'éprouvette et donc à la valeur maximale de cette courbe. Les performances des exemples sont normées par rapport au témoin exempt de la couche TPE (base 100). La valeur d'adhésion est complétée par le faciès de rupture ou type de rupture : un faciès adhésif signifie que l'interface adhésive a été le point de cassure alors qu'un faciès cohésif révèle une cohésion de matériau (couche diénique ou TPE) inférieure à la tenue adhésive de l'interface, avec un point de cassure à l'intérieur d'une des couches.

### VI-3. Exemples de stratifié

### VI-3-1. Exemple 1

Dans un premier temps, une composition thermoplastique de stratifié multicouche, et diverses couches diéniques ont été préparées, assemblées avant cuisson et testées comme indiqué précédemment, les compositions sont présentés dans les tableaux 1A et 1B ci-dessous.

**Tableau 1A**

| | |
|---|---|
| Composition thermoplastique | A1 |
| TPE : « SOE L606 » - Asahi Kasei- (pce) | 100 |
| Résine PPE :- « Xyron S202A » - Sabic, (pce) | 18 |

**Tableau 1B**

| Composition diénique: | B1 | B2 | B3 |
|---|---|---|---|
| SBR (1) | 100 | 60 | 51 |
| SOE (2) | 0 | 40 | 49 |
| Noir de carbone (3) | 5 | 5 | 5 |
| Silice (4) | 26 | 26 | 26 |
| Agent de couplage (5) | 2 | 2 | 2 |
| Antioxydant (6) | 2 | 2 | 2 |
| DPG (7) | 0,5 | 0,5 | 0,5 |
| Acide stéarique (8) | 2 | 2 | 2 |
| ZnO (9) | 3 | 3 | 3 |
| Soufre | 2 | 2 | 2 |
| Accélérateur (10) | 1 | 1 | 1 |

| | | | |
|---|---|---|---|
| (1) SBR solution copolymère de styrène et de butadiène avec 26,5% de motifs styrène et 24% de modifs 1,2 de la partie butadiène (Tg de -48°C) (2) SOE «SOE S 1611 » commercialisé par Asahi Kasei (3) Grade ASTM N234 commercialisé par la société Cabot (4) Silice « Zeosil 1165MP » de la société Rhodia (5) Agent de couplage TESTP « Si69 » de la société Degussa (6) N-(1,3-diméthylbutyl)-N'-phényl-p-phénylènediamine « 6-PPD » de la société Flexsys (7) DPG : Diphénylguanidine « Perkacit DPG » de la société Flexsys (8) Acide stéarique « Pristerene » de la société Uniquema (9) Oxyde de zinc de grade industriel de la société Umicore (10) N-cyclohexyl-2-benzothiazol-sulfénamide « Santocure CBS » de la société Flexsys | | | |

Les résultats présentés au tableau 2 mettent en évidence les excellents résultats en adhésion du stratifié selon l'invention, comparé à une situation dans laquelle la couche élastomère thermoplastique est associée à une couche diénique conventionnelle (c'est-à-dire ne comprenant pas du tout de TPE dans sa composition).

On note également que la comparaison des exemples A1/B2 et A1/B3 met en évidence qu'un à partir d'un taux de TPE à blocs SBR et PS de 40 pce dans la couche dite diénique, l'adhésion de cette couche avec une couche thermoplastique de TPE à blocs SBR et PS reste identique, si bien qu'il n'est pas nécessaire pour l'invention d'aller au-delà d'un taux de 49 pce de TPE à blocs SBR et PS ; au contraire un taux de TPE à blocs SBR et PS dans la couche diénique supérieur à 50 pce, rendrait le caractère élastomère thermoplastique plus important que le caractère diénique de cette couche et pourrait diminuer l'adhésion de la couche diénique à une autre couche diénique adjacente.

**Tableau 2**

| Stratifié multicouche | A1/B1 témoin | A1/B2 | A1/B3 |
|---|---|---|---|
| Performance adhésion (%) | 100 | 260 | 280 |
| Type de rupture | Adhésive | Cohésive | Cohésive |

## Revendications

1. Stratifié élastomérique pour pneumatique, ledit stratifié comportant au moins deux couches superposées d'élastomère :
o une première couche, constituée d'une composition à base d'au moins un élastomère thermoplastique (TPE), ledit élastomère thermoplastique étant un copolymère bloc comprenant au moins un bloc élastomère de type copolymère statistique butadiène-styrène éventuellement hydrogéné et au moins un bloc thermoplastique de type styrénique, à un taux compris dans un domaine allant de plus de 50 à 100 pce (parties en poids pour 100 parties en poids d'élastomère) ;
o une deuxième couche, constituée d'une composition à base d'au moins un élastomère diénique, le taux d'élastomère diénique étant compris dans un domaine allant de plus de 50 à 95 pce, et d'au moins un élastomère thermoplastique (TPE), ledit élastomère thermoplastique étant un copolymère bloc comprenant au moins un bloc élastomère de type copolymère statistique butadiène-styrène éventuellement hydrogéné et au moins un bloc thermoplastique de type styrénique, à un taux compris dans un domaine allant de 5 à moins de 50 pce.

2. Stratifié selon la revendication 1 dans lequel le ou les blocs élastomères SBR ont une teneur en styrène comprise dans un domaine allant de 10 à 60%.

3. Stratifié selon l'une quelconque des revendications précédentes dans lequel le ou les blocs élastomères SBR ont une teneur en liaisons -1,2 pour la partie butadiénique comprise dans un domaine allant de 4% à 75% molaire, et une teneur en liaisons -1,4 comprise dans un domaine allant de 20% et 96% molaire.

4. Stratifié selon l'une quelconque des revendications 1 à 3 dans lequel le ou les blocs élastomères SBR de la première couche sont hydrogénés de telle manière qu'une proportion allant de 25 à 100 % molaire des doubles liaisons dans la portion butadiène sont hydrogénées.

5. Stratifié selon l'une quelconque des revendications précédentes dans lequel le ou les blocs élastomères SBR de la deuxième couche sont hydrogénés de telle manière qu'une proportion allant de 0 à 80 % molaire des doubles liaisons dans la portion butadiène sont hydrogénées.

6. Stratifié selon l'une quelconque des revendications précédentes dans lequel le ou les blocs thermoplastiques styréniques du copolymère bloc sont choisis parmi les polymères ayant une température de transition vitreuse supérieure à 80°C, et, dans le cas d'un bloc thermoplastique semi cristallin, une température de fusion supérieure à 80°C.

7. Stratifié selon l'une quelconque des revendications précédentes dans lequel la fraction de bloc thermoplastique styrénique dans le copolymère bloc est comprise dans un domaine allant de 5 à 70 %.

8. Stratifié selon l'une quelconque des revendications précédentes dans lequel le ou les blocs thermoplastiques du copolymère bloc sont choisis parmi les polystyrènes.

9. Stratifié selon la revendication précédente dans lequel le ou les blocs thermoplastiques du copolymère bloc sont choisis parmi les polystyrènes obtenus à partir de monomères styréniques choisis dans le groupe constitué par le styrène non substitué, les méthylstyrènes, le para-tertio-butylstyrène, les chlorostyrènes, les bromostyrènes, les fluorostyrènes, le para-hydroxy-styrène, et les mélanges de ces derniers.

10. Stratifié selon la revendication précédente dans lequel le ou les blocs thermoplastiques du copolymère bloc sont obtenus à partir de polystyrène non substitué.

11. Stratifié selon l'une quelconque des revendications précédentes, dans lequel le taux d'élastomère thermoplastique (TPE) copolymère bloc comprenant au moins un bloc élastomère de type copolymère statistique butadiène-styrène éventuellement hydrogéné et au moins un bloc thermoplastique de type styrénique, dans la composition de la première couche est compris dans un domaine allant de 70 à 100 pce.

12. Stratifié selon l'une quelconque des revendications précédentes, dans lequel la première couche comprend en outre une résine thermoplastique comprenant des motifs polyphénylène éther éventuellement substitués.

13. Stratifié selon l'une quelconque des revendications précédentes, dans lequel le taux d'élastomère thermoplastique (TPE) copolymère bloc comprenant au moins un bloc élastomère de type copolymère statistique butadiène-styrène éventuellement hydrogéné et au moins un bloc thermoplastique de type styrénique, dans la composition de la deuxième couche est compris dans un domaine allant de 5 à 49 pce.

14. Stratifié selon l'une quelconque des revendications précédentes dans lequel l'élastomère diénique est choisi dans le groupe constitué par les homopolymères obtenus par polymérisation d'un monomère diène conjugué ayant de 4 à 12 atomes de carbone, les copolymères obtenus par copolymérisation d'un ou plusieurs diènes conjugués entre eux ou avec un ou plusieurs composés vinyle aromatique ayant de 8 à 20 atomes de carbone, et les mélanges de ces derniers.

15. Pneumatique comportant un stratifié selon l'une quelconque des revendications précédentes.

## Patentansprüche

1. Elastomeres Laminat für Reifen, wobei das Laminat mindestens zwei übereinanderliegende Schichten aus Elastomer umfasst:
o eine erste Schicht aus einer Zusammensetzung auf Basis mindestens eines thermoplastischen Elastomers (TPE), wobei es sich bei dem thermoplastischen Elastomer um ein Blockcopolymer mit mindestens einem Elastomerblock vom Typ gegebenenfalls hydriertes statistisch aufgebautes Butadien-Styrol-Copolymer und mindestens einem thermoplastischen Block vom Styrol-Typ handelt, in einem Gehalt in einem Bereich von mehr als 50 bis 100 phe (Gewichtsteile pro 100 Gewichtsteile Elastomer);
o eine zweite Schicht aus einer Zusammensetzung auf Basis mindestens eines Dienelastomers, wobei der Gehalt an Dienelastomer in einem Bereich von mehr als 50 bis 95 phe liegt, und mindestens eines thermoplastischen Elastomers (TPE), wobei es sich bei dem thermoplastischen Elastomer um ein Blockcopolymer mit mindestens einem Elastomerblock vom Typ gegebenenfalls hydriertes statistisch aufgebautes Butadien-Styrol-Copolymer und mindestens einem thermoplastischen Block vom Styrol-Typ handelt, in einem Gehalt in einem Bereich von 5 bis weniger als 50 phe.

2. Laminat nach Anspruch 1, wobei der SBR-Elastomerblock bzw. die SBR-Elastomerblöcke einen Styrolgehalt in einem Bereich von 10 bis 60% aufweist bzw. aufweisen.

3. Laminat nach einem der vorhergehenden Ansprüche, wobei der SBR-Elastomerblock bzw. die SBR-Elastomerblöcke einen Gehalt an 1,2-Bindungen für den Butadien-Teil in einem Bereich von 4 bis 75 Mol-% und einen Gehalt an 1,4-Bindungen in einem Bereich von 20 bis 96 Mol-% aufweist bzw. aufweisen.

4. Laminat nach einem der Ansprüche 1 bis 3, wobei der SBR-Elastomerblock bzw. die SBR-Elastomerblöcke der ersten Schicht so hydriert sind, dass ein Anteil im Bereich von 25 bis 100 Mol-% der Doppelbindungen im Butadien-Teil hydriert sind.

5. Laminat nach einem der vorhergehenden Ansprüche, wobei der SBR-Elastomerblock bzw. die SBR-Elastomerblöcke der zweiten Schicht so hydriert sind, dass ein Anteil im Bereich von 0 bis 80 Mol-% der Doppelbindungen im Butadien-Teil hydriert sind.

6. Laminat nach einem der vorhergehenden Ansprüche, wobei der thermoplastische Styrolblock bzw. die thermoplastischen Styrolblöcke des Blockcopolymers aus Polymeren mit einer Glasübergangstemperatur von mehr als 80°C und im Fall eines teilkristallinen thermoplastischen Blocks einem Schmelzpunkt von mehr als 860°C ausgewählt ist bzw. sind.

7. Laminat nach einem der vorhergehenden Ansprüche, wobei der Anteil des thermoplastischen Styrolblocks in dem Blockcopolymer in einem Bereich von 5 bis 70 % liegt.

8. Laminat nach einem der vorhergehenden Ansprüche, wobei der thermoplastische Block bzw. die thermoplastischen Blöcke des Blockcopolymers aus Polystyrolen ausgewählt ist bzw. sind.

9. Laminat nach dem vorhergehenden Anspruch, wobei der thermoplastische Block bzw. die thermoplastischen Blöcke des Blockcopolymers aus Polystyrolen, die aus Styrol-Monomeren aus der Gruppe bestehend aus unsubstituiertem Styrol, Methylstyrolen, para-tert-Butylstyrol, Chlorstyrolen, Bromstyrolen, Fluorstyrolen, para-Hydroxystyrol und Mischungen davon erhalten werden, ausgewählt ist bzw. sind.

10. Laminat nach dem vorhergehenden Anspruch, wobei der thermoplastische Block bzw. die thermoplastischen Blöcke des Blockcopolymers aus unsubstituiertem Polystyrol erhalten wird bzw. werden.

11. Laminat nach einem der vorhergehenden Ansprüche, wobei der Gehalt an thermoplastischem Elastomer (TPE), bei dem es sich um ein Blockcopolymer mit mindestens einem Elastomerblock vom Typ gegebenenfalls hydriertes statistisch aufgebautes Butadien-Styrol-Copolymer und mindestens einem thermoplastischen Block vom Styrol-Typ handelt, in der Zusammensetzung der ersten Schicht in einem Bereich zwischen 70 und 100 phe liegt.

12. Laminat nach einem der vorhergehenden Ansprüche, wobei die erste Schicht außerdem ein thermoplastisches Harz, das gegebenenfalls substituierte Polyphenylenether-Einheiten umfasst, umfasst.

13. Laminat nach einem der vorhergehenden Ansprüche, wobei der Gehalt an thermoplastischem Elastomer (TPE), bei dem es sich um ein Blockcopolymer mit mindestens einem Elastomerblock vom Typ gegebenenfalls hydriertes statistisch aufgebautes Butadien-Styrol-Copolymer und mindestens einem thermoplastischen Block vom Styrol-Typ handelt, in der Zusammensetzung der zweiten Schicht in einem Bereich zwischen 5 bis 49 phe liegt.

14. Laminat nach einem der vorhergehenden Ansprüche, wobei das Dienelastomer aus der Gruppe bestehend aus Homopolymeren, die durch Polymerisation eines konjugierten Dienmonomers mit 4 bis 12 Kohlenstoffatomen erhalten werden, Copolymeren, die durch Copolymerisation eines oder mehrerer konjugierter Diene miteinander oder mit einer oder mehreren vinylaromatischen Verbindungen mit 8 bis 20 Kohlenstoffatomen erhalten werden, und Mischungen davon ausgewählt ist.

15. Reifen, umfassend ein Laminat nach einem der vorhergehenden Ansprüche.

## Claims

1. Elastomeric laminate for tyres, said laminate comprising at least two superimposed layers of elastomer:
O a first layer, composed of a composition based on at least one thermoplastic elastomer (TPE), said thermoplastic elastomer being a block copolymer comprising at least one optionally hydrogenated butadiene/styrene random copolymer-type elastomer block and at least one styrene-type thermoplastic block, at a content within a range extending from more than 50 to 100 phr (parts by weight per 100 parts by weight of elastomer);
O a second layer, composed of a composition based on at least one diene elastomer, the content of diene elastomer being within a range extending from more than 50 to 95 phr, and on at least one thermoplastic elastomer (TPE), said thermoplastic elastomer being a block copolymer comprising at least one optionally hydrogenated butadiene/styrene random copolymer-type elastomer block and at least one styrene-type thermoplastic block, at a content within a range extending from 5 to less than 50 phr.

2. Laminate according to Claim 1, in which the SBR elastomer block(s) have a styrene content within a range extending from 10% to 60%.

3. Laminate according to either one of the preceding claims, in which the SBR elastomer block(s) have a content of 1,2- bonds for the butadiene part within a range extending from 4 mol% to 75 mol% and a content of 1,4- bonds within a range extending from 20 mol% to 96 mol%.

4. Laminate according to any one of Claims 1 to 3, in which the SBR elastomer block(s) of the first layer are hydrogenated such that a proportion extending from 25 mol% to 100 mol% of the double bonds in the butadiene portion are hydrogenated.

5. Laminate according to any one of the preceding claims, in which the SBR elastomer block(s) of the second layer are hydrogenated such that a proportion extending from 0 to 80 mol% of the double bonds in the butadiene portion are hydrogenated.

6. Laminate according to any one of the preceding claims, in which the thermoplastic styrene block(s) of the block copolymer are selected from polymers having a glass transition temperature of greater than 80°C and, in the case of a semicrystalline thermoplastic block, a melting point of greater than 80°C.

7. Laminate according to any one of the preceding claims, in which the fraction of thermoplastic styrene block in the block copolymer is within a range extending from 5% to 70%.

8. Laminate according to any one of the preceding claims, in which the thermoplastic block(s) of the block copolymer are selected from polystyrenes.

9. Laminate according to the preceding claim, in which the thermoplastic block(s) of the block copolymer are selected from polystyrenes obtained from styrene monomers selected from the group consisting of unsubstituted styrene, methylstyrenes, para-tert-butylstyrene, chlorostyrenes, bromostyrenes, fluorostyrenes, para-hydroxystyrene and mixtures thereof.

10. Laminate according to the preceding claim, in which the thermoplastic block(s) of the block copolymer are obtained from unsubstituted polystyrene.

11. Laminate according to any one of the preceding claims, in which the content of the block copolymer thermoplastic elastomer (TPE) comprising at least one optionally hydrogenated butadiene/styrene random copolymer-type elastomer block and at least one styrene-type thermoplastic block in the composition of the first layer is within a range extending from 70 to 100 phr.

12. Laminate according to any one of the preceding claims, in which the first layer additionally comprises a thermoplastic resin comprising optionally substituted polyphenylene ether units.

13. Laminate according to ny one of the preceding claims, in which the content of the block copolymer thermoplastic elastomer (TPE) comprising at least one optionally hydrogenated butadiene/styrene random copolymer-type elastomer block and at least one styrene-type thermoplastic block in the composition of the second layer is within a range extending from 5 to 49 phr.

14. Laminate according to one of the preceding claims, in which the diene elastomer is selected from the group consisting of homopolymers obtained by polymerization of a conjugated diene monomer having from 4 to 12 carbon atoms, copolymers obtained by copolymerization of one or more conjugated dienes with one another or with one or more vinylaromatic compounds having from 8 to 20 carbon atoms, and mixtures thereof.

15. Tyre comprising a laminate according to any one of the preceding claims.
